# EUROPEAN PATENT APPLICATION

(11) **EP 4 568 232 A1**
(43) Date of publication of application: **11.06.2025**
(21) Application number: 24217123.9
(22) Date of filing: 03.12.2024
(51) Int. Cl.: H04L 67/1396, B60L 50/00

(54) **METHOD AND SYSTEM FOR CONTROLLING POWER SWITCH OF VEHICLE**

(30) Priority: 05.12.2023 TW 112147232
(71) Applicant: Kwang Yang Motor Co., Ltd., Kaohsiung City 80794 (TW)
(72) Inventor: HOU, Yi-An, 11501 Taipei City (TW); HSIEH, Hsin-Yen, 11501 Taipei City (TW)
(74) Representative: PGA S.p.A., Milano, Succursale di Lugano

(57) **Abstract**

A method and a system for controlling a power switch (114) of a vehicle (110) are adapted to be used on the vehicle (110). Firstly, a remote server (120) is utilized to determine whether it is feasible to connect to the vehicle (110) via a network (130). When a result of the determination is positive, the remote server (120) transmits a first instruction, which is used for turning on or off the power switch (114), to the vehicle (110) via the network (130). After the vehicle (110) receives the first instruction, a determination as to whether the vehicle (110) is in a moving state is made. Being in the moving state, the vehicle (110) ignores the first instruction. Not being in the moving state, in response to the first instruction, the vehicle (110) controls the power switch (114) to turn the power switch (114) on or off.

## Description

The disclosure relates to a method and a system for controlling a power switch of a vehicle, and more particularly to a method and a system where a remote server can be utilized to control a power switch of a vehicle over a network.

In recent years, along with the advancement of electronics and information technology, vehicle development has become more and more intelligentized. In addition to basic carrying functions, improvement in security and peripheral application functions has also become an issue for development in the industry. For example, a smarter vehicle control has been regarded as an application that a user of a vehicle extremely desires. Without the requirement of a physical key, it is common for the user to be able to use a smart mobile device or a chip card to activate the vehicle.

On the other hand, as environmental awareness increases and the electric vehicle technologies advance, it has gradually become an important goal in the automotive field to develop vehicles using electric energy as an energy source to replace conventional vehicles using petrochemical fuel as an energy source, which makes electric vehicles more and more popular. Generally speaking, a larger number of electronic components/devices are mounted on an electric vehicle, and may cooperate with mobile devices of a user to provide more personalized applications and experiences.

In the electric motorcycle industry, more and more commercial applications have been successively developed. In some instances, business models, such as providing electric motorcycles for rent (e.g., short-term rentals of electric motorcycle) or charging for renting a battery of an electric motorcycle, have been rolled out to market. In related applications or business models, business owners have to properly manage and control electric motorcycles to provide users with a better experience and to protect the rights of the business owners themselves.

Therefore, an object of the disclosure is to provide a power-switch control system for a vehicle and a method for controlling a power switch of a vehicle that can alleviate at least one of the drawbacks of the prior art.

According to the disclosure, the method and the power-switch control system are provided as set out in each of the appended claims.

Other features and advantages of the disclosure will become apparent in the following detailed description of the embodiment(s) with reference to the accompanying drawings. It is noted that various features may not be drawn to scale.
Figure 1 is a schematic diagram illustrating a power-switch control system for a vehicle according to an embodiment of the disclosure.
Figure 2 is a schematic diagram illustrating a vehicle according to an embodiment of the disclosure.
Figure 3 is a schematic diagram illustrating an electric vehicle according to an embodiment of the disclosure.
Figure 4 is a schematic diagram illustrating the power-switch control system for a vehicle according to another embodiment of the disclosure.
Figure 5 is a flow chart illustrating a method for controlling a power switch of a vehicle according to an embodiment of the disclosure.
Figure 6 is a flow chart illustrating the method for controlling a power switch of a vehicle according to another embodiment of the disclosure.
Figures 7 and 8 cooperatively illustrate a flow chart of the method for controlling a power switch of a vehicle according to still another embodiment of the disclosure.
Figure 9 is a flow chart illustrating the method for controlling a power switch of a vehicle according to further another embodiment of the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

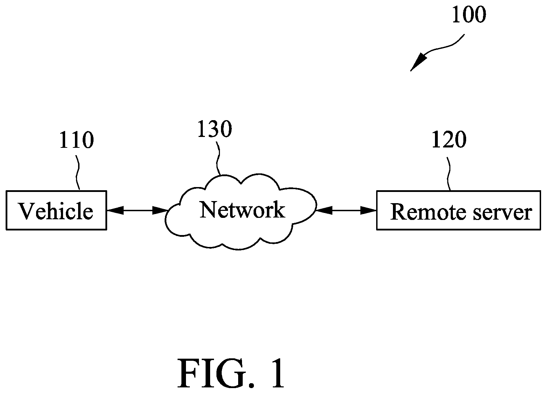

Figure 1 illustrates a power-switch control system 100 for a vehicle according to an embodiment of the present disclosure. The power-switch control system 100 according to the embodiment of the present disclosure at least includes a vehicle 110 and a remote server 120. The vehicle 110 and the remote server 120 can be coupled to each other via a network 130. In some embodiments, the network 130 may be a wired network, a telecommunications network, or a wireless network (such as a Bluetooth^{®} network, a Wi-Fi network or the like). It is noted that in some embodiments, the vehicle 110 may be a traditional vehicle (e.g., a gasoline car or a motorcycle) that uses petroleum as an energy source.

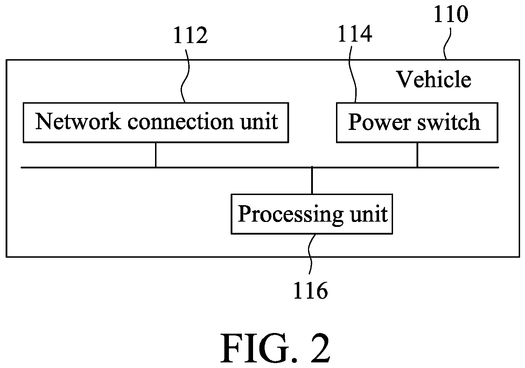

Figure 2 illustrates the vehicle 110 according to an embodiment of the disclosure. As shown in the figure, the vehicle 110 may at least include a network connection unit 112, a power switch 114 (also known as an ignition switch) for ignition, and a processing unit 116. The network connection unit 112 may connect to a network, so as to enable the vehicle 110 to have network connectivity. Similarly, the network may be a wired network, a telecommunications network, or a wireless network such as a Bluetooth^{®} network, a Wi-Fi network or the like. Turning the power switch 114 on or off would activate the main electrical systems for the vehicle 110 and enable the vehicle 110 to be powered on or off. The processing unit 116 is coupled to the network connection unit 112 and the power switch 114, and is configured to control operations of all the hardware and software in the vehicle 110, and to cooperate with the remote server 120 (see Figure 1) to implement a method for controlling a power switch of a vehicle of the present disclosure. Details will be discussed later.

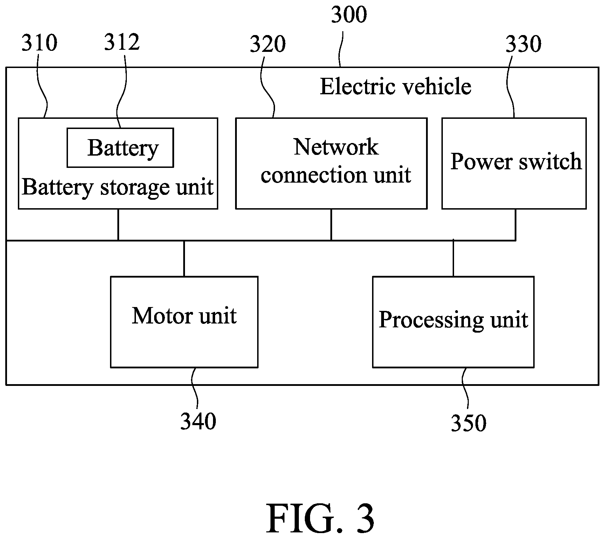

Additionally, in some embodiments, the vehicle 110 may be an electric vehicle (e.g., an electric car or an electric motorcycle) that uses electricity as an energy source. Figure 3 illustrates an electric vehicle 300 according to an embodiment of the disclosure. The electric vehicle 300 according to the embodiment of the present disclosure may be an electric carrier (for example, an electric automobile or an electric motorcycle) that is powered with a battery serving as an energy source. As shown in this figure, the electric vehicle 300 at least includes a battery storage unit 310, a network connection unit 320, a power switch 330, a motor unit 340 and a processing unit 350. The battery storage unit 310 is configured to receive at least one battery, such as a battery 312. The battery 312 may be a battery module that includes at least one battery cell for storing and releasing electricity. It is noted that in some embodiments, the at least one battery may be connected in series or in parallel to provide electricity to the motor unit 340 of the electric vehicle 300 for operation. The network connection unit 320 may connect to a network so as to enable the electric vehicle 300 to have network connectivity. In some embodiments, the network may be a wired network, a telecommunications network or a wireless network (such as a Bluetooth^{®} network, a Wi-Fi network or the like). Turning the power switch 330 on or off would activate the main electrical systems for the electric vehicle 300 and enable the electric vehicle 300 to be powered on or off. The motor unit 340 is configured to operate to drive the electric vehicle 300 and other components of the electric vehicle 300 that operate in virtue of rotation. The processing unit 350 is coupled to the aforementioned elements, and is configured to control operations of all hardware and software in the electric vehicle 300 and to cooperate with the remote server 120 (see Figure 1) to implement the method of the present disclosure. Details will be discussed later. It is noted that in some embodiments, the electric vehicle 300 may include a storage unit (not shown in the drawings). The storage unit may store relevant information regarding the electric vehicle 300 and/or the battery 312.

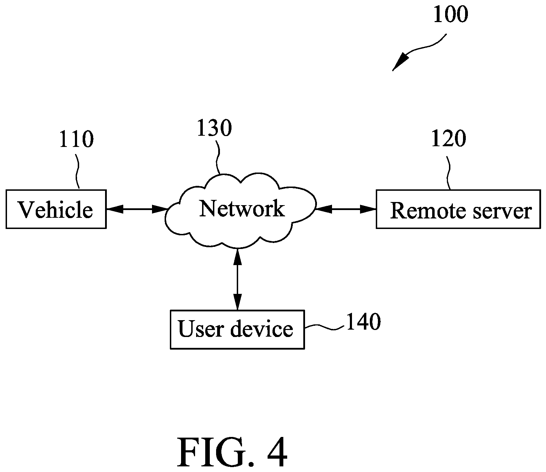

Figure 4 illustrates a power-switch control system 100 for a vehicle according to another embodiment of the present disclosure. As shown in the figure, the power-switch control system 100 for a vehicle according to the embodiment of the present disclosure at least includes a vehicle 110, a remote server 120 and a user device 140. The vehicle 110, the remote server 120 and the user device 140 may be coupled to each other via a network 130. Similarly, in some embodiments, the network 130 may be a wired network, a telecommunications network or a wireless network (such as a Bluetooth^{®} network, a Wi-Fi network or the like). In this embodiment, the user device 140 may be a mobile device (such as a smartphone) that corresponds to a user of the vehicle 110. It should be noted that the aforementioned user device 140 is merely an example for the present disclosure, and the present disclosure is not limited thereto. It is noted that the user device 140 may be paired with and be connected to the vehicle 110 for performing data transmission. It is noted that the remote server 120 may be an electronic device. The remote server 120 may simultaneously manage a plurality of vehicles that are located at one location or are located at different locations via the network 130, and a plurality of charging stations. It is reminded that the charging stations may include a plurality of batteries for provision to at least one vehicle (such as an electric motorcycle or an electric car) for access. The vehicle 110, the remote server 120 and the user device 140 may cooperate to implement the method of the present disclosure, and the details thereof will be explained later.

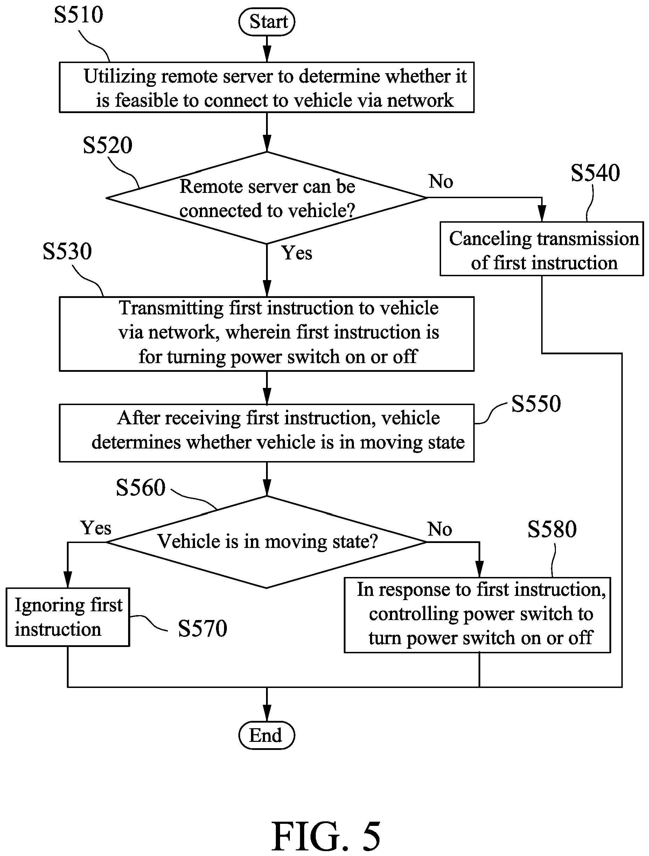

Figure 5 illustrates the method for controlling a power switch of a vehicle according to an embodiment of the present disclosure. The method according to the embodiment of the present disclosure is adapted to be used on a vehicle and a remote server.

At first, as shown in step S510, the remote server is utilized to determine whether it is feasible to connect to the vehicle via a network. It is noted that in some embodiments, the network may be a wired network, a telecommunications network or a wireless network (such as a Bluetooth^{®} network, a Wi-Fi network or the like). When the remote server is capable of being connected to the vehicle (Yes in step S520), in step S530, the remote server transmits a first instruction to the vehicle via the network. It is noted that the first instruction is used to turn on or off a power switch of the vehicle. When the remote server is incapable of being connected to the vehicle via the network (No in step S520), in step S540, the remote server cancels transmission of the first instruction. After the vehicle receives the first instruction, in step S550, the vehicle (more specifically, a processing unit of the vehicle) determines whether the vehicle is in a moving state. When the vehicle is in the moving state (Yes in step S560), in step S570, the vehicle ignores the first instruction. In other words, the first instruction will not be executed when the vehicle is in the moving state. When the vehicle is not in the moving state (No in step S560), in step S580, the vehicle controls, in response to the first instruction, the power switch of the vehicle to turn the power switch on or off.

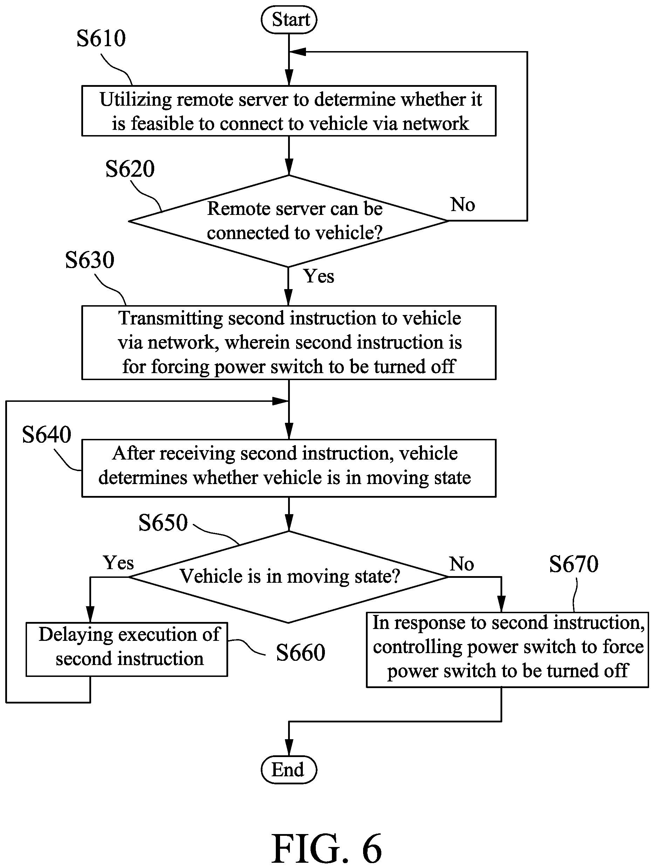

Figure 6 illustrates the method for controlling a power switch of a vehicle according to another embodiment of the present disclosure. The method according to the embodiment of the present disclosure is adapted to be used on a vehicle and a remote server.

Firstly, as shown in step S610, the remote server is utilized to determine whether it is feasible to connect to the vehicle via a network. Similarly, in some embodiments, the network may be a wired network, a telecommunications network or a wireless network (such as a Bluetooth^{®} network, a Wi-Fi network or the like). When the remote server is incapable of being connected to the vehicle via the network (No in step S620), a flow of the method returns to step S610. When the remote server is capable of being connected to the vehicle (Yes in step S620), in step S630, the remote server transmits a second instruction to the vehicle via the network. It is noted that the second instruction is used to force a power switch of the vehicle to be turned off. After the vehicle receives the second instruction, in step S640, the vehicle (more specifically, a processing unit of the vehicle) determines whether the vehicle is in a moving state. When the vehicle is in the moving state (Yes in step S650), in step S660, execution of the second instruction is delayed, and the flow returns to step S640 to keep determining whether the vehicle is in the moving state. When the vehicle is not in the moving state (No in step S650), in step S670, the vehicle controls, in response to the second instruction, the power switch of the vehicle so as to force the power switch to be turned off. In other words, when the vehicle is in the moving state, the vehicle delays execution of the second instruction until the vehicle is not in the moving state, at which time the second instruction is executed for turning off the power switch of the vehicle.

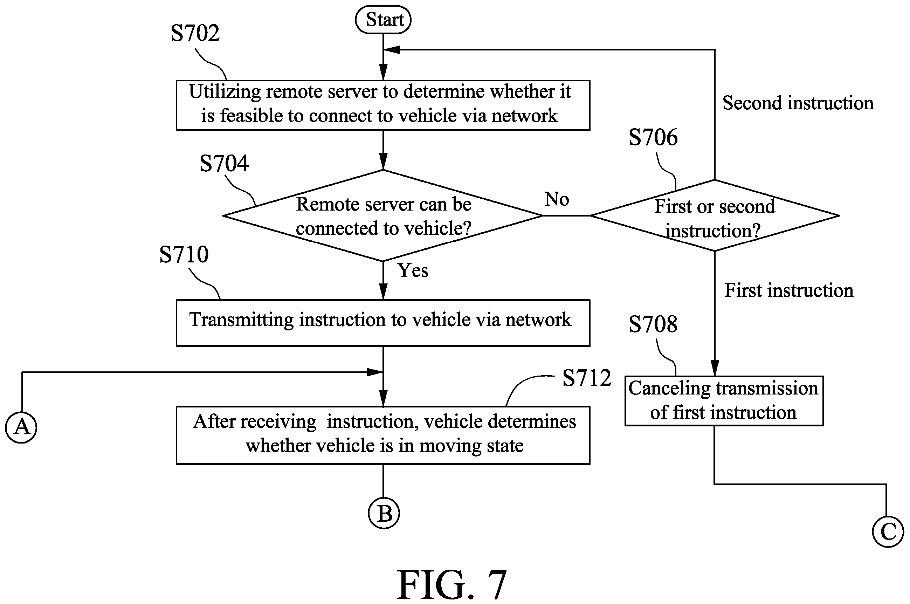

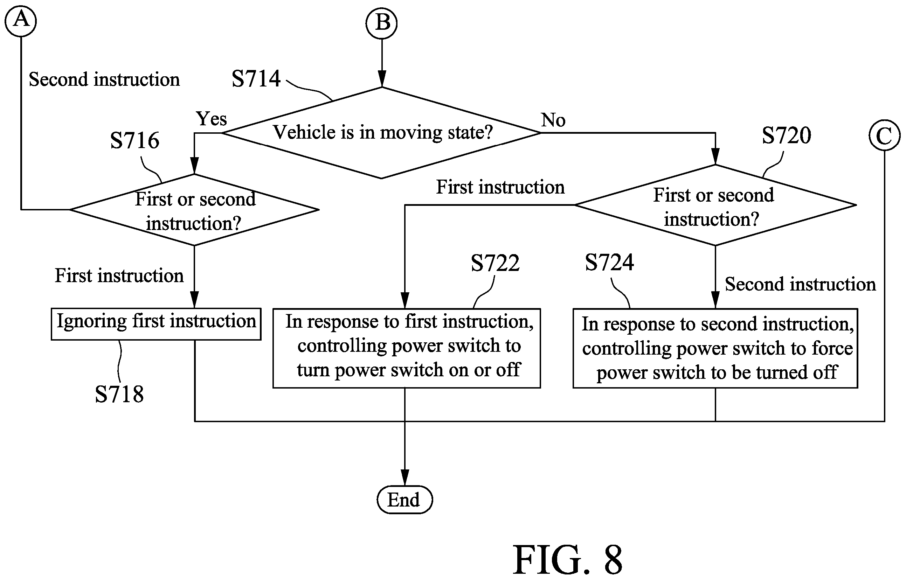

Figures 7 and 8 cooperatively illustrate the method for controlling a power switch of a vehicle according to still another embodiment of the present disclosure. The method according to the embodiment of the present disclosure is adapted to be used on a vehicle and a remote server.

At the beginning, as shown in step S702, the remote server is utilized to determine whether it is feasible to connect to the vehicle via a network. Similarly, in some embodiments, the network may be a wired network, a telecommunications network or a wireless network (such as a Bluetooth^{®} network, a Wi-Fi network or the like). When the remote server is incapable of being connected to the vehicle via the network (No in step S704), in step S706, the remote server determines whether an instruction transmitted this time by the remote server is a first instruction or a second instruction . It is noted that the first instruction is used to turn on or off a power switch of the vehicle, and the second instruction is used to force the power switch of the vehicle to be turned off. When the transmitted instruction is the second instruction, the flow returns to step S702. When the transmitted instruction is the first instruction, as shown in step S708, the remote server cancels transmission of the first instruction. When the remote server is capable of being connected to the vehicle via the network (Yes in step S704), as shown in step S710, the remote server transmits the instruction to the vehicle via the network.

After the vehicle receives the instruction, as shown in step S712, the vehicle (more specifically, a processing unit of the vehicle) determines whether the vehicle is in a moving state. When the vehicle is in the moving state (Yes in step S714), as shown in step S716, the vehicle determines whether the instruction received by the vehicle is the first instruction or the second instruction. When the received instruction is the second instruction, the flow returns to step S712. When the received instruction is the first instruction, as shown in step S718, the vehicle ignores the first instruction. In other words, the first instruction is not executed when the vehicle is in the moving state. When the vehicle is not in the moving state (No in step S714), as shown in step S720, the vehicle determines whether the instruction received by the vehicle is the first instruction or the second instruction. When the received instruction is the first instruction, as shown in step S722, the vehicle controls the power switch of the vehicle to turn the power switch on or off. When the received instruction is the second instruction, as shown in step S724, the vehicle controls the power switch of the vehicle to force the power switch to be turned off. As mentioned previously, when the vehicle is in the moving state, the vehicle delays execution of the second instruction until the vehicle is not in the moving state, at which time the second instruction is executed for turning off the power switch of the vehicle.

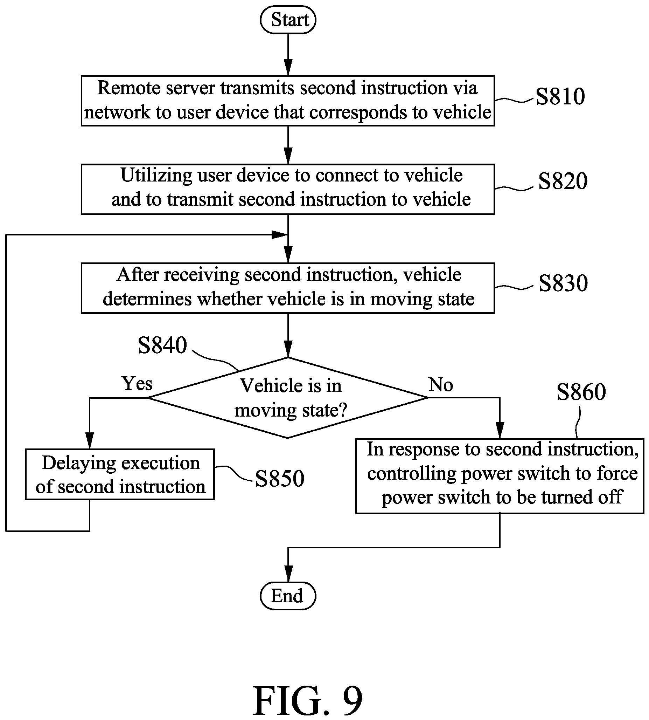

Figure 9 illustrates the method for controlling a power switch of a vehicle according to further another embodiment of the present disclosure. The method according to the embodiment of the present disclosure is adapted to be used on a vehicle, a user device and a remote server.

Initially, as shown in step S810, the remote server transmits a second instruction to the user device that corresponds to the vehicle via a network. Similarly, in some embodiments, the network may be a wired network, a telecommunications network or a wireless network (such as a Bluetooth^{®} network, a Wi-Fi network or the like). It is noted that the second instruction is used to force a power switch of the vehicle to be turned off. Next, as shown in step S820, the user device is utilized to connect to the vehicle via the network (such as a Wi-Fi network or a Bluetooth network), and to transmit the second instruction to the vehicle. After the vehicle receives the second instruction, as shown in step S830, the vehicle (more specifically, a processing unit of the vehicle) determines whether the vehicle is in a moving state. When the vehicle is in the moving state (Yes in step S840), as shown in step S850, execution of the second instruction is delayed, and the flow returns to step S830 to keep determining whether the vehicle is in the moving state or not. When the vehicle is not in the moving state (No in step S840), as shown in step S860, the vehicle controls, in response to the second instruction, the power switch of the vehicle to force the power switch to be turned off. Similarly, when the vehicle is in the moving state, the vehicle delays execution of the second instruction until the vehicle is not in the moving state, at which time the second instruction is executed for turning off the power switch of the vehicle.

Therefore, through the method and the power-switch control system 100 according to the present disclosure, the remote server can be utilized to control the power switch of the vehicle via the network, thereby providing a mechanism for management and control that is relatively more flexible and appropriate, which provides users with a better experience, and protects the rights and interests of business owners.

The method of the present invention, or a portion thereof, may be implemented as a set of program codes. The set of program codes may be stored in a physical storage medium, such as a floppy disk, a compact disk, a hard disk, or any machine-readable (e.g., computer-readable) storage medium, or may be implemented as a computer program product that is not limited in the physical form. When the program codes are executed by a machine (e.g., a computer), the machine turns into a device for implementing the method of the present invention. The program codes may also be transmitted by a transmission medium, such as one or more wires, cables, optical fibers, or any other transmission means, and when the program codes are received, loaded, and executed by a machine (e.g., a computer), such machine turns into a device for implementing the method of the present invention. When the method is implemented by a general purpose processor, the program codes cause the processor to operate as a specific device having a function similar to an application-specific integrated circuit (ASIC).

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A method for controlling a power switch (114) of a vehicle (110), adapted to be used on the vehicle (110), **characterized by** following steps of:
determining, by a remote server (120), whether it is feasible to connect to the vehicle (110) via a network (130);
transmitting a first instruction to the vehicle (110) via the network (130) when the remote server (120) is capable of being connected to the vehicle (110), wherein the first instruction is used for turning on or off the power switch (114) of the vehicle (110);
after the vehicle (110) receives the first instruction, determining whether the vehicle (110) is in a moving state;
ignoring the first instruction when the vehicle (110) is in the moving state; and
when the vehicle (110) is not in the moving state, in response to the first instruction, controlling the power switch (114) of the vehicle (110) to turn the power switch (114) on or off.

2. The method as claimed in claim 1, further including a step of canceling transmission of the first instruction when the remote server (120) is incapable of being connected to the vehicle (110) via the network (130).

3. The method as claimed in one of claims 1 and 2, further including following steps of:
transmitting a second instruction to the vehicle (110) via the network (130) when the remote server (120) is capable of being connected to the vehicle (110), wherein the second instruction is used to force the power switch (114) of the vehicle (110) to be turned off;
after the vehicle (110) receives the second instruction, determining whether the vehicle (110) is in the moving state;
when the vehicle (110) is not in the moving state, in response to the second instruction, controlling the power switch (114) of the vehicle (110) to force the power switch (114) to be turned off; and
when the vehicle (110) is in the moving state, delaying execution of the second instruction until the vehicle (110) is not in the moving state, at which time the second instruction is executed for turning off the power switch (114) of the vehicle (110).

4. The method as claimed in claim 3, further including steps of, when the remote server (120) is incapable of being connected to the vehicle (110) via the network (130):
the remote server (120) continuously determining whether it is feasible to connect to the vehicle (110) via the network (130), and transmitting the second instruction to the vehicle (110) via the network (130) after being connected to the vehicle (110).

5. The method as claimed in one of claims 1 and 2, further including following steps of:
the remote server (120) transmitting a second instruction via the network (130) to a user device (140) that corresponds to the vehicle (110), utilizing the user device (140) to connect to the vehicle (110) and to transmit the second instruction to the vehicle (110);
after the vehicle (110) receives the second instruction, determining whether the vehicle (110) is in the moving state;
when the vehicle (110) is not in the moving state, in response to the second instruction, controlling the power switch (114) of the vehicle (110) to force the power switch (114) to be turned off; and
when the vehicle (110) is in the moving state, delaying execution of the second instruction until the vehicle (110) is not in the moving state, at which time the second instruction is executed for turning off the power switch (114) of the vehicle (110).

6. A power-switch control system (100) for a vehicle, **characterized by**:
a vehicle (110) including:
a network connection unit (112);
a power switch (114); and
a processing unit (116) that is coupled to said network connection unit (112) and said power switch (114); and
a remote server (120) configured to determine whether it is feasible to connect to said vehicle (110) via a network (130), and to transmit a first instruction to said vehicle (110) via the network (130) when said remote server (120) is capable of being connected to said vehicle (110), wherein the first instruction is used to turn on or off said power switch (114) of said vehicle (110),
wherein after said vehicle (110) receives the first instruction, said processing unit (116) of said vehicle (110) is configured to determine whether said vehicle (110) is in a moving state, to ignore the first instruction when said vehicle (110) is in the moving state, and when said vehicle (110) is not in the moving state, in response to the first instruction, to control said power switch (114) of said vehicle (110) to turn said power switch (114) on or off.

7. The power-switch control system (100) as claimed in claim 6, wherein:
said remote server (120) is configured to transmit a second instruction to said vehicle (110) via the network (130) when said remote server (120) is capable of being connected to said vehicle (110), wherein the second instruction is used to force said power switch (114) of said vehicle (110) to be turned off;
after said vehicle (110) receives the second instruction, said processing unit (116) is configured to determine whether said vehicle (110) is in the moving state;
when said vehicle (110) is not in the moving state, in response to the second instruction, said processing unit (116) is configured to control said power switch (114) of said vehicle (110) to force said power switch (114) to be turned off; and
when said vehicle (110) is in the moving state, said processing unit (116) is configured to delay execution of the second instruction until said vehicle (110) is not in the moving state, at which time said processing unit (116) executes the second instruction for turning off said power switch (114) of said vehicle (110).
